Europäisches Patentamt

European Patent Office

Office européen des brevets

(11) Publication number: **0 213 690**
**A2**

## EUROPEAN PATENT APPLICATION

(21) Application number: 86303854.3

(22) Date of filing: 21.05.86

(51) Int. Cl.⁴: **G01N 1/00 , G01N 1/28 , G01N 23/10 , G01T 1/20**

(30) Priority: 30.08.85 US 771318

(43) Date of publication of application:
**11.03.87 Bulletin 87/11**

(84) Designated Contracting States:
**DE FR GB SE**

(71) Applicant: **Packard Instrument Company, Inc.
2200 Warrenville Road
Downers Grove, IL 60515(US)**

(72) Inventor: **O'Day, Benedict Raymond
48 Saratoga Drive
Batavia Illinois(US)**
Inventor: **De Filippis, John Stanley
1546 Lighthouse Drive
Naperville Illinois(US)**

(74) Representative: **Szczuka, Jan Tymoteusz et al
Cruikshank & Fairweather 19 Royal
Exchange Square
Glasgow G1 3AE Scotland(GB)**

(54) **Vented vial holder for reducing static electricity.**

(57) A holder (10) for use with scintillation counting for securing a small sample vial (50) in a vial transport carrier designed for larger vials is disclosed. The holder includes specific features for allowing elimination of static electricity charges on the sample vial by a static eliminator. The holder includes openings (32,34,36) allowing the flow of ions to contact the sample vial (50) for the purpose of eliminating static charges on the surface of the vial.

*FIG. 1*

## Vented Vial Holder For Reducing Static Electricity

This invention relates to a holder adapted for use with a scintillation counter, which acts to secure small-sized glass and plastic vials within a vial transport carrier and includes means for promoting the elemination of static electricity charges on the surface of the vial containing the sample to be tested.

It has been determined in the liquid scintillation art that electrostatic discharge during sample measurement can affect the results of scintillation counting. Electrostatic discharge is a photon producing interference in liquid scintillation counting. Liquid scintillation counting is an analytical method for quantification of radioactivity by measuring emitted light from a sample. The photons produced in a detection chamber by causes other than nuclear decay will interfere with the measurement. Photon producing interference such as static discharge is sufficiently close to the pulse generated by light produced from nuclear decay events that it may be interpreted as a nuclear event thereby affecting the reliability of the output of the liquid scintillation counter.

Static electricity consists of charged ions, positive or negative, which are atoms that are electrically out of balance due to the removal or addition of one or more electrons. Like magnets, ions of like charge repel and of dislike charge attract.

Materials which are common to the construction of commercial liquid scintillation counters and other materials which we contact in our daily routines are generators of static electricity. Static charges can develop on a scintillation vial or in a scintillation cocktail. Static charges on the vial surface can be produced during shipping and as a result of movement in the sample changer of a liquid scintillation counter. Glass vials have less problems with static charge buildup than do plastic vials. Small vials in adapters or holders are particularly prone to static charge buildup.

In order to control the buildup of static electricity, one of the methods used has been to present an atmosphere of counter-charged ions to the surface charged with static electricity. The counter ions annihilate the surface static charge resulting in a neutral surface effect. These counter ions may be produced either by ionizing radiation or electricity.

Utilizing electrical current to generate an ionized atmosphere of mixed counter ions has been commercially successful. An annular-shaped electrostatic device has been utilized commercially and is located within a liquid scintillation counter such that as a sample vial is removed from the vial transport carrier and transported to the measurement chamber, the vial interacts with charged ions produced by the electrostatic device. In a short time, such as two seconds, the ions generated by the electrostatic device act to neutralize the static electricity on the vial. The electrostatic device works by supplying a high voltage to the surrounding atmosphere which causes a localized electrical disturbance around each electrode resulting in the production of counter ions. As the vial containing the sample is passed through the control device, the counter ions passively migrate to the vial surface and act to neutralize accumulated charged ions.

Most automatic sample changing based liquid scintillation counters employ a vial transport carrier device in which a multiplicity of vials may be secured. Sample vials of different sizes are used for different purposes. When a vial transport carrier defines large-sized positions for receiving large-sized vials, a holder or adapter is necessary to place a smaller vial in the large position of the vial transport carrier.

When a small vial is placed in an adapter which is placed in a position in the vial transport carrier, the adapter and vial transport carrier are transported as a unit through the electrostatic control device to the sample chamber. Unfortunately, the counter ions produced by the electrostatic control device must migrate to the surface of the vial to perform their function of neutralizing the existing static charges. With the typical adapter encasing the vial, this flow of neutralizing ions has been substantially reduced. The herein invention is directed toward providing openings in the adapter to promote this flow of charged ions such that a small vial contained within an adapter is appropriately treated to minimize the static charges on the surface of the vial.

Scintillation vials are typically manufactured from glass or fossil fuel derived compounds. Small vials are extremely sensitive to the buildup of static electricity and even more so if made of plastic. Hence, it is extremely important that means be provided for minimizing static electricty from the surface of a small plastic or glass vial.

It is an object of the present invention to provide a holder for securing a small vial in a vial transport carrier designed to receive large-sized vials.

It is a still further object of the present invention to provide means for allowing ion flow through the holder to the sample vial surface for the purpose of eliminating static electricity.

It is yet another object of the present invention to provide apparatus for eliminating static electricity from small vials in a liquid scintillation counter designed to accommodate only large vials.

Other objects will be apparent from the description to follow and appended claims.

These and other objects of the present invention are achieved according to the preferred embodiment of the invention by providing a holder for securing a small vial in a vial transport carrier sized to receive large vials, both small and large vials containing a sample to be placed in a scintillation counter. The holder includes a body means of similar size and configuration to a large vial and including a central opening for maintaining a small vial within the body means, and said body means further defining openings sized to allow an atmosphere of charged ions to flow through the openings to the small vial for the purpose of eliminating static charges on the surface of the small vial secured within the holder.

Additionally, disclosed is apparatus for securing scintillation counter samples contained in small vials within a vial transport carrier designed for large vials and for maintaining the ability of a liquid scintillation counter to minimize static charges on the surface of a small vial as the small vial is passed through a static eliminator prior to being tested. The holder is sized to fit within the vial transport carrier and includes means for securing a small vial within the holder. The holder further defines openings which allow the passage of air containing charged ions, said ions being created by the static eliminator and said ions flowing through the openings of the holder to neutralize any static charge in the surface of the small vial.

Figure 1 is an isometric exploded view of the holder.

Figure 2 is a sectional view of Figure 1 taken at line II-II.

Figure 3 is an isometric view of a small vial secured within the holder.

Figure 4 is a sectional view of a small vial.

Figure 5 is a sectional plan view showing the vials of different sizes secured within a vial transport carrier.

Figure 6 is a schematic view of a liquid scintillation counter including the static eliminator and the vials secured within the holder.

The structure herein will be described with reference to a liquid scintillation counter. It is to be understood that this device has application to similar equipment such as gamma counters and other devices when static charges on a vial need to be minimized.

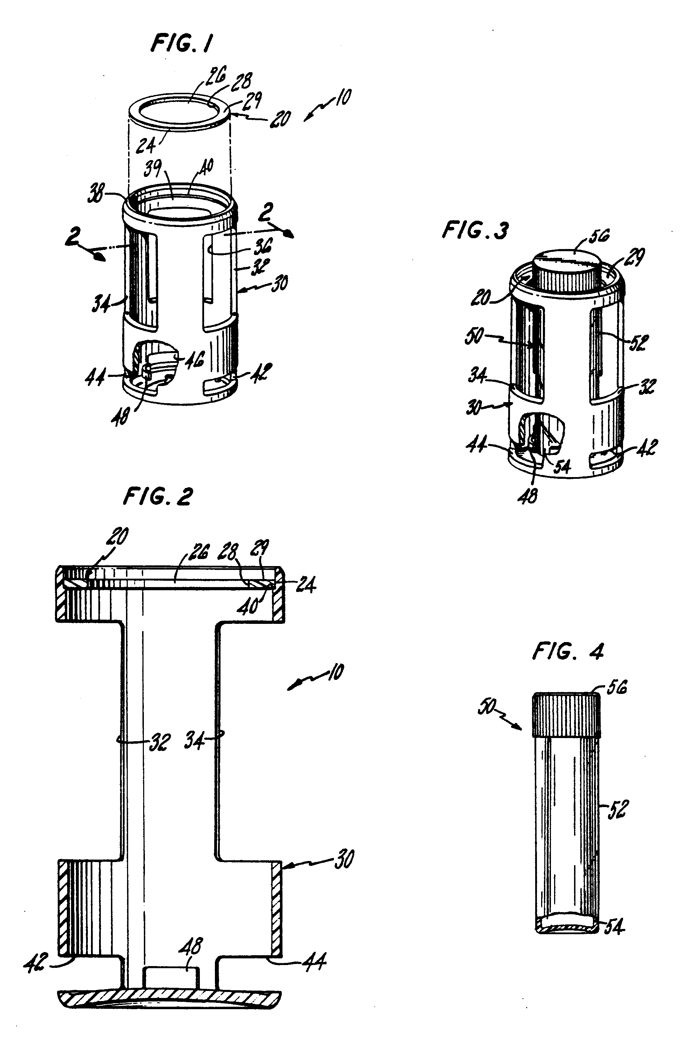

Referring to Figure 1, there may be seen a holder 10 having body 30 and top portion 20. The top portion 20 is generally annular in configuration and includes a holding annulus 22 at the top thereof and a snap annulus 24 at the bottom thereof. Interior wall 28 extends between the holding annulus and the snap annulus defining a central opening 26 into which the small vial may be secured. Top surface 29 of holding annulus 22 is designed to allow a cap or other portion of a small vial to rest thereon as it is centered within the holder by opening 26.

Body portion 30 of holder 10 defines openings 32, 34 and 36 spaced about the circumference of the body. It is through these openings that the charged ions may flow to reach the vial located therewithin. Central opening 39 extends axially the length of the body 30 and it is within this central opening that the small vial is secured. Body 30 additionally includes a top surface 38 on which the holding annulus 22 of the top portion may rest. Snap slot 40 is defined on the interior of the body and is sized to mate with snap annulus 24 of the top portion such that the top portion is secured to the body by force-fit with the snap annulus secured within the snap slot. Additional openings 42, 44, and 46 are located about the lower portion of the body for promoting additional ion flow therethrough. Support base 48 is an annular support to which the bottom of the sample vial may be secured. Being annular in configuration, the support base 48 not only acts to maintain the vial at the appropriate height within the holder but also acts to center it as well.

Figure 2 is a sectional view of Figure 1 taken at line II-II. In this view openings 32 and 34 and the body portions 30 may be specifically seen. It also may be seen that snap annulus 24 is secured within snap slot 40 and that holding annulus 22 rests on the top of body 30.

Referring to Figures 3 and 4 it may be seen that small vial 50 having cap 56 attached thereto and defining side walls 52 and bottom wall 54 may be secured within the holder. As shown in Figure 3, the small vial is secured in the central opening of the body and the bottom wall 54 of the small vial rests within support base 48 which both supports the vial in the vertical direction and acts to center the vial. Cap 56 may or may not rest upon holding annulus 22 depending upon the design of the small vial. The side walls 52 of the small vial, in any event, engage interior wall 28 of the top portion to maintain the top portion of the vial in the desired position. Hence, the vial top portion may be in contact with wall 28 and the bottom portion may be in contact with support base 48 such that vial 50 is secured in the desired position within holder 10. As may be seen in Figure 3, openings 32, 34, as well as openings 42, and 44 allow charged ions to enter the interior central opening of the holder to interact with the vial surface. Naturally, these charged ions also interact with the holder and eliminate any static electricity that may accumulate there.

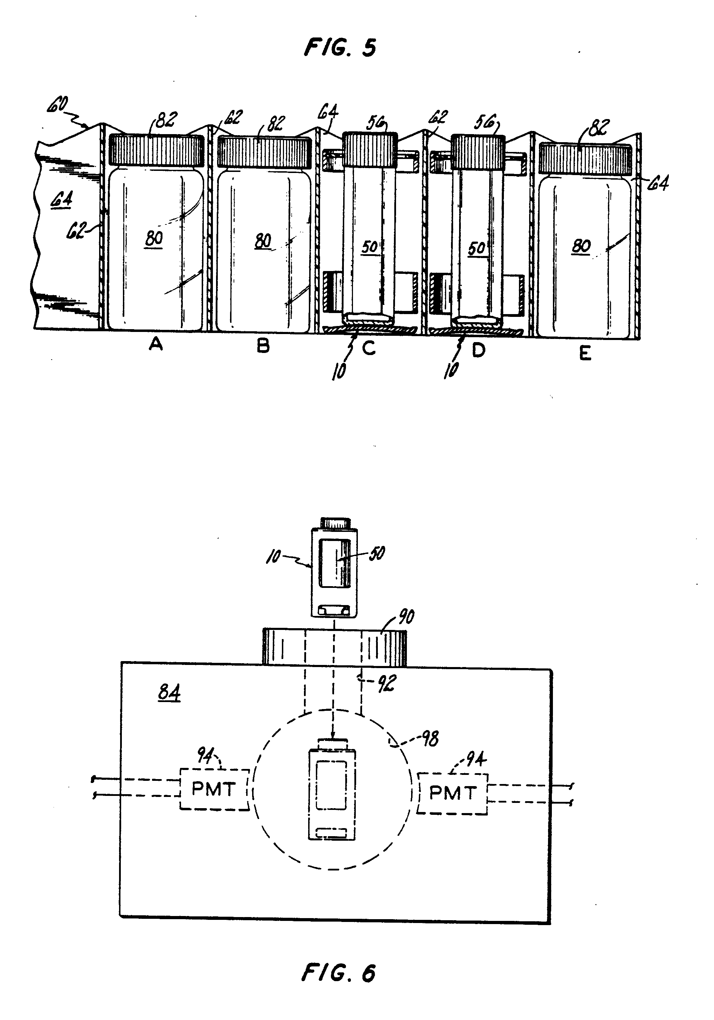

Figure 5 is a cutaway view of a vial transport carrier showing positions A through E. The number of positions in a vial transport carrier may vary depending upon numerous factors related to the specific counter and vial transport carrier design. In Figure 5 at positions A, B and E, are shown large vials 80 having caps 82. This vial transport carrier 60 is designed to have each position sized to specifically hold a large vial as shown. In positions C and D are shown holders 10 into which small vials 50 have been placed. It may be seen that holder 10 is approximately the same exterior size and configuration as large vial 80 such that it is maintained within the appropriate position of vial transport carrier 60 as defined by divider 62 and back wall 64. Hence, in this manner large vial 80 may be removed from a position of the vial transport carrier or a holder containing a small vial 50 may be removed from a position of the vial transport carrier without any change in the mechanical operation of the liquid scintillation counter.

Figure 6 is a schematic view of a liquid scintillation counter. Cavity 98, otherwise known as the sample chamber is shown located within shielding 84 and has a pair of photomultiplier tubes PMT (94) located on either side of the cavity for monitoring optical events. The vial and holder would typically be secured within vial transport carrier 60 although not shown in this Figure.

As may be seen in Figure 6, vial 50 and holder 70 are sized to be displaced downwardly, through static eliminator 90 and through passageway 92. Static eliminator 90 is the high voltage device which charges ions and allows these ions to be placed in the airstream for neutralizing the ions on the holder or vial. The sample then continues downwardly to cavity 98.

The structure herein has been described to show that the holder for containing a small-sized vial located in a vial transport carrier having larger-sized positions is extremely important for obtaining accurate counting results. By providing a holder having openings which allow charged ions to eliminate static electricity on the vial, the overall accuracy of the liquid scintillation counting results is improved.

The structure has been described with reference to a particular embodiment. It is to be understood by those skilled in the art that variations and modifications can be effected within the spirit and scope of the disclosure and claims.

## Claims

1. A holder (10) for securing a small vial (50) in a vial transport carrier sized to receive large vials, both sized vials containing a sample to be placed in a scintillation counter which comprises:

a body means (30) sized similarly to a large vial and including a central opening (26) for maintaining a small vial (50) within the body means (30); and

said body means further defining openings (32,34,36) sized to allow an atmosphere of charged ions to flow through the openings to the small vial (50) for the purpose of eliminating static charges on the surface of the small vial (50) secured within the holder.

2. The apparatus as set forth in claim 1 wherein the holder further comprises:

a top portion (20) including a holding annulus (22) defining an inwardly extending annular top surface (29) and a snap annulus (24); and

wherein the body means (30) further defines a snap slot (40) positioned adjacent the top of the body means (30) and sized to receive the snap annulus (24) of the top portion whereby the top portion (20) may be secured to the body means (30) by engaging the snap annulus (24) within the snap slot (40).

3. The apparatus as set forth in claim 2 wherein the top portion (20) defines a central opening (26) and wherein the body means defining a support base (48), both of which act to center a small vial (50) within the holder (10).

4. Apparatus for securing scintillation counter samples contained in small vials (50) within a vial transport carrier designed for large vials and for maintaining the ability of a scintillation counter to eliminate static charges on the surface of the small vial as the small vial (50) is passed through a static eliminator prior to being tested which comprises:

a holder (10) sized to fit within the vial transport carrier and including means (48,52) for securing a small vial within the holder; and

said holder defining openings (32,34,36) which allow the passage of air containing charged ions, said ions being created by the static eliminator and said ions flowing through the openings (32,34,36) of the holder to neutralize any static charge on the surface of the small vial (50).

5. The apparatus as set forth in claim 4 wherein the holder further comprises:

a body portion (30) generally cylindrical in configuration, including a support base (48) at the bottom and defining a central axially extending opening - (26) for the receipt of the small vial (50) and additional openings (32,34,36) on the exterior surface for allowing ion flow therethrough; and

a top portion (20) secured to the upward end of the body portion (30), said top portion (20) defining a central opening (26) of smaller diameter than the central opening of the body portion, said top portion central opening (26) being sized and positioned to secure in combination with the support base (48) a small vial (50) within the body portion central opening.

6. The apparatus as set forth in claim 5 wherein the top portion (20) further comprises a snap annulus (24) and the body portion (20) further defines a snap slot (40) sized to receive the snap annulus (24) whereby the snap annulus (24) is secured within the snap slot (40) to secure the top portion (20) of the body portion (30).

7. A scintillation counting system including means for measuring optical events in a sample within a vial (50) when positioned in a sample chamber, a static eliminator through which the sample is passed to eliminate static electricity into the vial containing the sample and means for removing the sample from a vial transport carrier, and passing the sample through the static eliminator before the sample is placed in the sample chamber which comprises:

holder means (10) for allowing various sized vials to be mounted in a vial transport carrier sized to receive a standard size vial, said holder means - (10) securing smaller vials (50) within the vial transport carrier; and

said holder means (10) defining openings (32,34,36) for allowing air containing charges ions from the static eliminator to contact the smaller vial (50) for the purpose of minimizing static electricity on the smaller vial.

FIG. 1

FIG. 3

FIG. 2

FIG. 4

FIG. 5

FIG. 6